# EUROPÄISCHE PATENTANMELDUNG

(11) **EP 1 519 182 A2**
(43) Veröffentlichungstag der Anmeldung: **30.03.2005**
(21) Anmeldenummer: 04021270.6
(22) Anmeldetag: 08.09.2004
(51) Int. Cl.: G01M 13/02

(54) **Prüfstand für Fahrzeuge, Fahrzeugkomponenten oder dergleichen**

(30) Priorität: 25.09.2003 DE 10344478
(71) Anmelder: Instron Structural Testing Systems GmbH, 64293 Darmstadt (DE)
(72) Erfinder: Schäfer, Ulrich, 70736 Fellbach (DE); Ihrle, Helmut, 75365 Calw (DE); Jung, Gerald, 64686 Lautertal (DE)
(74) Vertreter: Behrens, Helmut, Dipl.-Ing.

(57) **Zusammenfassung**

Ein Prüfstand zur Betriebslastensimulation für Fahrzeugkomponenten, Fahrzeuge und dergleichen (Prüflinge), wobei mindestens ein Belastungs-System bestehend aus einer stationären Plattform, einer beweglichen Plattform, sowie diese verbindende ansteuerbare Arbeitszylinder vorgesehen ist, und wobei die bewegliche Plattform mit dem Prüfling gekoppelt ist und wobei durch Ansteuerung der Arbeitszylinder mittels der beweglichen Plattform Kräfte und/oder Momente und/oder Wege auf den Prüfling übertragbar sind, soll derart weitergebildet werden, dass ein einfaches Umrüsten auf unterschiedliche Achsabstände sowie eine Vergrößerung des Hubes in Vertikalrichtung bei gleicher Bauhöhe möglich ist. Dies wird dadurch erreicht, dass die bewegliche Plattform als Spannzeug für den Prüfling ausgebildet ist.

## Beschreibung

Die Erfindung betrifft einen Prüfstand für Fahrzeuge, Fahrzeugkomponenten oder dergleichen gemäß Oberbegriff des Patentanspruchs 1.

Prüfstände dienen zur Betriebslastensimulation an Achsbaugruppen von Pkw und Lkw oder zur Simulation des dynamischen Fahrverhaltens an kompletten Fahrzeugen.

Erst mit Einsatz schnellerer und preiswerterer Prozessrechner wurde es möglich, Kräfte und Bewegungen in den Einleitungsstellen der zu prüfenden Komponenten noch realistischer mittels Transformation der Meßgrößen und Stellgrößen in Echtzeit durch Regelung der Freiheitsgrade einzuleiten. Durch den Einsatz von Messrädern, welche im Fahrbetrieb alle relevanten Belastungssignale erfassen, kam zwangsläufig die Forderung nach sechs Freiheitsgraden. Diese sechs Freiheitsgrade sind: Vertikalkraft, Längskraft, Seitenkraft, Bremsmoment, Sturz- und Lenkmoment.

Prüfstände, die sechs Freiheitsgrade an jeder Einleitungsstelle realisieren können, sind beispielsweise aus der Firmendruckschrift von IST "Labtronic 8800 structural test control system" bekannt. Diese Prüfstände sind modular aus den bekannten Hydropuls-Komponenten wie servohydraulische Zylinder und Krafteinleitungsgestänge sowie Umlenkhebel aufgebaut. Bei dieser Anordnung ist der Platzbedarf eines derartigen Prüfsystems sowie die bewegten Massen relativ groß.

Weiterhin sind Prüfstände bekannt, die die Einleitung der sechs Freiheitsgrade über ein sogenanntes Hexapoden-System verwirklichen. Ein derartiges System ist ein komplexes mechatronisches System, bestehend aus einer beweglichen Plattform und einer festen Basis. Beide sind untereinander über sechs Aktuatoren verbunden. Jedes dieser sechs Elemente besitzt eine variable Länge, die durch die Erregung eines Zylinders gesteuert werden kann. Mit diesem Aufbau kann eine Bewegung der beweglichen Plattform um sechs Freiheitsgrade erzielt werden. Die bewegliche Plattform ist bei dem bekannten Prüfstand über Koppelelemente mit den Einleitungsstellen verbunden.

Bei diesen Prüfständen sind nicht nur die eingesetzte Anzahl von Komponenten und somit Verschleißteile, sondern auch die bewegten Massen reduziert, wodurch die Betriebslastensimulation in noch höheren Frequenzbereich möglich ist. Bedingt durch die geringe Anzahl der beweglichen Teile ist die Eigenfrequenz und somit der nutzbare Frequenzbereich höher.

Aufgabe der vorliegenden Erfindung ist es, einen Prüfstand der eingangs genannten Gattung derart weiterzubilden, dass ein einfaches Umrüsten auf unterschiedliche Achsabstände sowie eine Vergrößerung des Hubes in Vertikalrichtung (Einfederungsweg) bei gleicher Bauhöhe möglich ist. Diese Aufgabe wird durch die im Patentanspruch 1 angegebenen Merkmale gelöst.

Durch die erfindungsgemäße Ausgestaltung des Prüfstandes, wobei die bewegliche Plattform des Hexapoden-Belastungssystems als Spannzeug für die zu prüfenden Bauteilkomponente bzw. den Prüfling ausgebildet ist, ist ein schnelleres und einfacheres Umrüsten auf unterschiedlich zu prüfende Achsabstände und Achstypen möglich. Die Kopplung des Adapterelementes mit der Einleitungsstelle kann dabei in einer Ausgestaltung voll automatisch erfolgen.

Durch die erfindungsgemäße Anordnung kann ein größerer Hub in Z-Richtung (Vertikalrichtung) bei gleicher Bauhöhe in Vergleich zu den bekannten Hexapoden-Belastungssystemen erzielt werden.

Ein weiterer Vorteil des erfindungsgemäßen Prüfstandes besteht darin, dass die Original-Felge in den Prüfablauf einbezogen werden kann und somit der Radadapter entfällt.

Die Erfindung wird nachfolgend an einem Ausführungsbeispiel beschrieben, das in den Figuren dargestellt ist. Es zeigt:
- Fig. 1:: eine schematische Darstellung eines Prüfstandes für Fahrzeugachsen;
- Fig. 2:: eine Draufsicht des Prüfstandes gemäß Fig. 1;
- Fig. 3a:: eine Detaildarstellung des Felgenadapters in geöffnetem Zustand;
- Fig. 3b:: eine Detaildarstellung des Felgenadapters in geschlossenem Zustand.

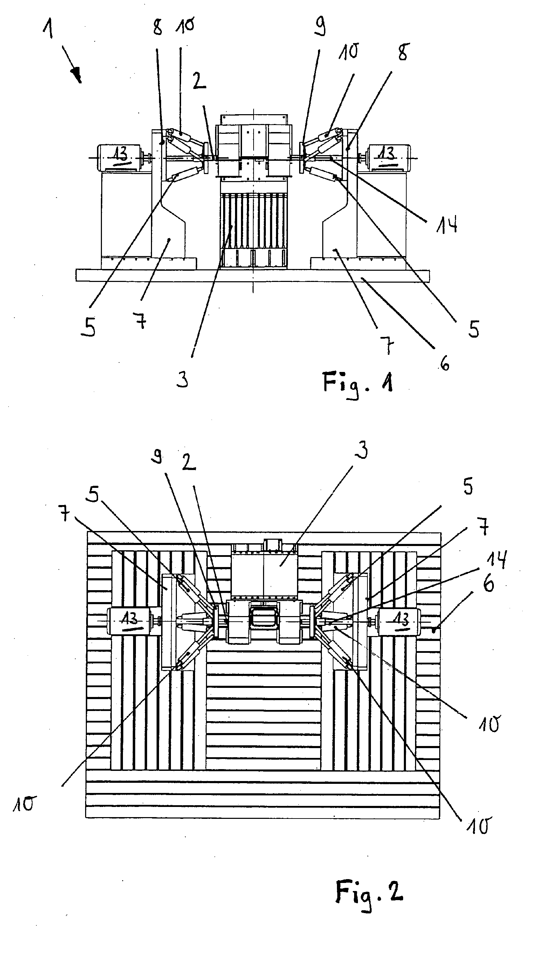

In den Fig. 1 und 2 ist ein Prüfstand 1 für eine Fahrzeugachse 2 dargestellt, bestehend aus Achsbock 3 mit Achse 2 und Original-Felgen 4 und zwei Hexapod-Belastungssystemen 5.

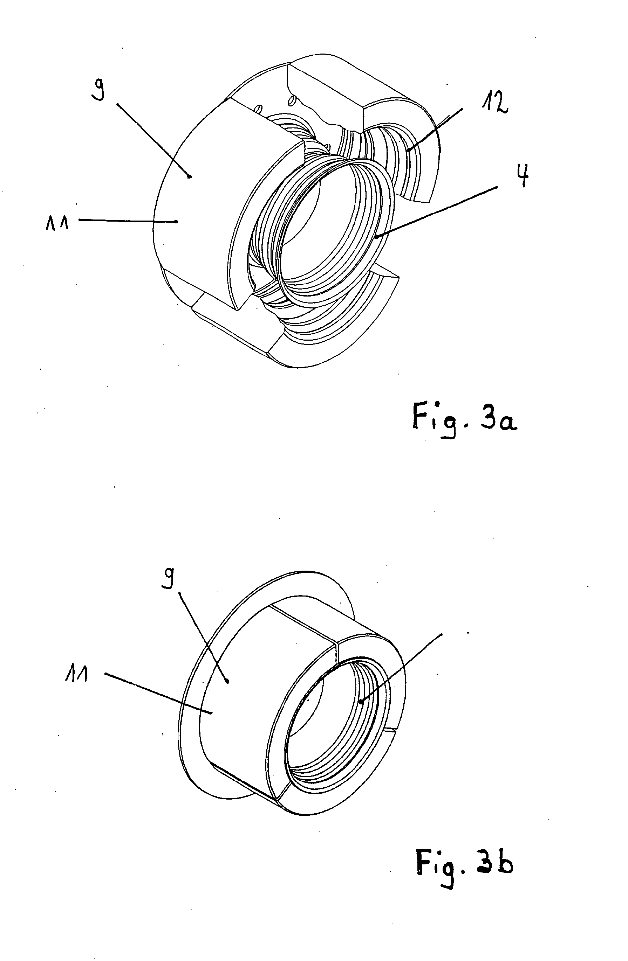

Der Achsbock 3 ist auf einer horizontalen Fundamentplatte 6 befestigt. Beidseits des Achsbockes 3 ist jeweils ein Winkelbock 7 längs der Fundamentenplatte 6 verschiebbar angeordnet. Die vertikalen, dem Achsbock 3 zugewandten Seitenflächen 8 der Winkelböcke 7 bilden jeweils die feststehende Basisplatte des HexapodenBelastungssystems 5. Wie eingangs bereits erläutert, besteht ein derartiges Hexapodensystem 5 aus einer beweglichen Plattform 9 und einer feststehenden Basisplatte 8. Die feste Basisplatte 8 sowie die bewegliche Plattform 9 sind untereinander über sechs Aktoren 10 verbunden. Die Aktoren 10 sind im Ausführungsbeispiel als Hydraulikzylinder ausgebildet. Die Zylinder sind dabei symmetrisch angeordnet. Die an der zu prüfenden Achse 2 angeordnete Original-Felge 4 und die mit einem Klemmmechanismus ausgestattete bewegliche Plattform 9 (Felgenadapter) des ersten bzw. zweiten Hexapoden-Belastungssystems 5 liegen jeweils in einer gemeinsamen Ebene. Der Klemmmechanismus des Felgenadapters 9 ist als dreigeteiltes ringförmiges Element 11 ausgebildet und dient als Spannzeug für die Original-Felge 4. Die Manteloberfläche des Adapterinnenrings 12 ist zur formschlüssigen Verbindung mit der Original-Felge 4 der Felgenkontur angepasst. Nähere Einzelheiten hierzu sind aus der Detaildarstellung zu den Figuren 3a und 3b ersichtlich. Der Felgenadapter 9 besitzt über den Außenumfang verteilt Anlenkungspunkte für die Hydraulikzylinder 10. Die Anlenkungspunkte sind üblicherweise als Kugelgelenke ausgebildet, so dass eine beliebige Bewegung / Stellung der beweglichen Plattform 9 erreicht wird.

Die Detaildarstellung zu den Fig. 3a bzw. Fig. 3b zeigt den Felgenadapter 9 in geöffnetem bzw. geschlossenem Zustand. Die drei Ringsegmente 11 des Felgenadapters 9 können jeweils gegenseitig verschraubt oder über hydraulische Elemente geklemmt werden. Hierdurch ist eine Ausführungsvariante möglich, durch die ein automatisches Ankoppeln / Spannen des Felgenadapters 9 an die Original-Felge 4 der Achse 2 erzielbar ist.

Die sechs servohydraulischen Zylinder 10 werden über eine Regelelektronik mit einer PC-Steuerung betrieben, wobei die IST-Signale der Messräder direkt in den Regelkreis zurückgeführt werden.

Wie es aus der Fig. 1 bzw. 2 ersichtlich ist, ist in einer weiteren erfindungsgemäßen Ausgestaltung die Anordnung von zwei zusätzlichen Belastungsmaschinen 13 vorgesehen. Die Belastungsmaschinen 13 sind jeweils seitlich neben den Winkelböcken 7 gestellfest abgestützt und jeweils über eine Kardanwelle 14 mit den Antriebswellen des Fahrzeugs gekoppelt. Durch diese Anordnung ist eine Einbeziehung des Antriebsstranges mit in die Simulation möglich.

## Patentansprüche

1. Prüfstand zur Betriebslastensimulation für Fahrzeugkomponenten, Fahrzeuge und dergleichen (Prüflinge), wobei mindestens ein Belastungs-System bestehend aus einer stationären Plattform, einer beweglichen Plattform, sowie diese verbindende ansteuerbare Arbeitszylinder vorgesehen ist, und wobei die bewegliche Plattform mit dem Prüfling gekoppelt ist und wobei durch Ansteuerung der Arbeitszylinder mittels der beweglichen Plattform Kräfte und/oder Momente und/oder Wege auf den Prüfling übertragbar sind, **dadurch gekennzeichnet, dass** die bewegliche Plattform als Spannzeug für den Prüfling ausgebildet ist.

2. Prüfstand zur Betriebslastensimulation für Fahrzeugkomponenten, Fahrzeuge und dergleichen (Prüflinge), **dadurch gekennzeichnet, dass** zusätzlich Belastungseinheiten vorgesehen sind, die mit dem Antriebsstrang des Prüflings gekoppelt sind und die eine Belastung des Antriebsstranges simulieren.
